# EUROPEAN PATENT SPECIFICATION

(11) **EP 2 899 240 B1**
(45) Date of publication and mention of the grant of the patent: **08.01.2020**
(21) Application number: 15155335.1
(22) Date of filing: 29.06.2012
(51) Int. Cl.: C09D 5/16, C09D 183/12

(54) **NOVEL POLYSILOXANE-BASED FOULING RELEASE COATINGS INCLUDING BIOCIDE(S)**
NEUE ANTIFÄULNISWIRKSTOFFFREISETZENDE BESCHICHTUNGEN AUF POLYSILOXANBASIS DIE BIOCIDE ENTHALTEN
REVÊTEMENTS ANTI-SALISSURES À BASE DE POLYSILOXANE COMPRENANT DES BIOCIDES

(43) Date of publication of application: 29.07.2015
(62) Divisional of application: 12805177.8
(73) Proprietor: Hempel A/S, 2800 Kongens Lyngby (DK)
(72) Inventor: Olsen, Stefan Møller, 2830 Virum (DK); Yebra, Diego Meseguer, 08291 Ripollet (Barcelona) (ES)
(74) Representative: Inspicos P/S

(56) References cited:
- WO-A1-95/32862
- WO-A1-2006/002630
- WO-A1-2008/074102
- US-A- 5 919 689
- US-A1- 2003 203 979
- US-A1- 2009 221 752
- US-B2- 6 559 201
- KIM YOUNG DUK ET AL: "Siloxane-based biocatalytic films and paints for use as reactive coatings", BIOTECHNOLOGY AND BIOENGINEERING, WILEY & SONS, HOBOKEN, NJ, US, vol. 72, no. 4, 20 February 2001 (2001-02-20), pages 475-482, XP002535934, ISSN: 0006-3592
- DATABASE WPI Week 200682 22 April 2005 (2005-04-22) Thomson Scientific, London, GB; AN 2006-806651 XP002658933, & JP 2006 299132 A (KANSAI PAINT CO LTD) 2 November 2006 (2006-11-02)

## Description

### FIELD OF THE INVENTION

The present invention relates to novel polysiloxane-based fouling release coats having included therein non-reactive fluorinated oil(s) and biocide(s), in particular for suppressing marine bio-fouling. In particular variants, a) the coat further comprises one or more hydrophilic-modified polysiloxanes oils; and/or b) the binder matrix has included as a part thereof hydrophilic oligomer/polymer moieties.

### BACKGROUND OF THE INVENTION

WO95/32862 discloses an antifouling composition comprising a polysiloxane-based binder system and a biocide.

WO 2008/074102 A1 discloses a coating composition for biofouling protection comprising a siloxane elastomer based on two α,ω-dihydroxypolydimethyl siloxanes of different molecular weight. The composition may also comprise one or both of a silicone oil and a perfluoropolyether fluorinated oil.

US 2002/0192181 discloses an antifouling composition comprising a cured or cross-linked polymer free of perfluoropolyether moieties (e.g. a polysiloxane) and a fluid fluorinated alkyl- or alkoxy-containing polymer or oligomer.

### SUMMARY OF THE INVENTION

The present inventors have now developed paint compositions for preparing new polysiloxane-based fouling release coatings (i.e. a cured paint coat) which comprise one or more non-reactive fluorinated oils, and one or more biocides. In this way, the advantages of silicone fouling release are combined with those of traditional anti-fouling coatings, thus gaining a foul-free, low-friction surface.

### DETAILED DISCLOSURE OF THE INVENTION

### Main aspects of the invention

The present invention is as defined in the claims.

A main embodiment of the invention relates to a fouling release coating composition comprising a polysiloxane-based binder system, preferably constituting at least 40 % by dry weight of the coating composition, and one or more non-reactive fluorinated oils (cf. the description further below).

The polysiloxane-based binder system typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight of the coating composition.

The term "polysiloxane-based binder system" is intended to mean that the binder system mainly consists of polysiloxane parts, i.e. that more than 50 % by weight, preferably more than 60 % by weight, e.g. more than 70 % by weight, of the binder system is represented by polysiloxane parts. Preferably, the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder system (i.e. the binder components and any cross-linkers). The remainder of the binder system is preferably made of the hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder system.

In one embodiment, the fouling release coating composition comprises a polysiloxane-based binder system, preferably constituting at least 40 % by dry weight of the coating composition, and 0.01-20 % by dry weight of one or more non-reactive fluorinated oils.

In a variant hereof, the composition further comprises one or more biocides, wherein the weight ratio between the one or more non-reactive fluorinated oils and the one or more biocides is in the range 1:0.2 to 1:6. Typically, the relative weight ratio between the one or more fluorinated oils and the one or more biocides is in the range of 1:0.05 to 1:1000, e.g. 1:0.1 to 1:120, such as 1:0.1 to 1:10, or 1:0.15 to 1:8, in particular 1:0.2 to 1:6, or 1:0.2 to 1:5, or 1:0.25 to 1:4, especially 1:0.3 to 1:3.

In one embodiment, the non-reactive fluorinated oils constitute 0.05-10 % by dry weight of the coating composition.

In a further embodiment (which can be applicable with the foregoing), at least one biocide is an organic biocide.

In a further embodiment (which can be applicable with the foregoing), the one or more biocides constitutes 0.1-10 % by dry weight of the coating composition.

In a further embodiment (which can be applicable with the foregoing), the coating composition has a viscosity in the range of 25-25,000 mPa·s, such as in the range of 150-15,000 mPa·s, in particular in the range of 200-4,000 mPa·s.

### The cured paint coat

As mentioned above, the present invention also provides a cured paint coat comprising a polysiloxane-based binder matrix, preferably constituting at least 40 % by dry weight of the coat, and one or more non-reactive fluorinated oils.

The paint coat is preferably used as the top coat in a coating system comprising two or more paint coat layers (e.g. at least a primer coat and a tie coat in addition to the top coat).

### Fluorinated oils

The coating composition (and thereby the paint coat) have included therein one or more fluorinated oil(s). By the term "oil" is inherently meant that the constituent does not form covalent bonds to the polysiloxane-based binder matrix. Hence, the fluorinated oil(s) do not contain groups that can react with the binder (or binder components) or the cross-linker (if present), hence the one or more fluorinated oil(s) are intended to be non-reactive, in particular with respect to the binder components. In particular, the fluorinated oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

It is preferred that the one or more fluorinated oil(s) have a viscosity in the range of 10-20,000 mPa·s, such as in the range of 20-10,000 mPa·s, in particular in the range of 40-5,000 mPa·s.

In a preferred embodiment, the fluorinated oil(s) has a number average molecular weight (Mₙ) in the range of 100-100,000 g/mol, such as in the range of 250-75,000 g/mol, in particular in the range of 500-50,000 g/mol.

The one or more fluorinated oils may be utilized to control the leaching of the one or more biocides.

In one embodiment, the one or more fluorinated oils are selected from fluoroalkyl modified oils, e.g. perfluorinated oils, perfluoroalkyl-modified polysiloxane, perfluoro siloxane, perfluoro polyether, perfluorinated alkanes, or perfluoroalkyl modified polyalkylene oxide, perfluoro polyalkylene oxide.

Commercially available examples of such oils are:

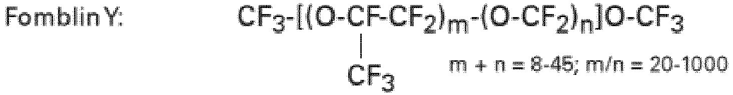

Lumiflon LF-200: (Fluoroethylene-Alkyl Vinyl Ether) alternating copolymer.

In another embodiment, the one or more fluorinated oils are selected from fluoroalkyl modified polyoxyalkylene polysiloxane oils (e.g. PEG-PDMS). These compounds are polysiloxanes which have been modified with fluoroalkylene and polyoxyalkylene, and can have a linear or branched/pendant conformation, or a combination of a linear and branched/pendant conformation. In the linear form, the polymer will generally have the structure A-B-C where A is a fluoroalkyl group, B is a polysiloxane and C is a polyoxyalkylene. Therefore, it will only have one fluoroalkyl group and one polyoxyalkylene group per polysiloxane molecule. In a variation, the modification of the polysiloxane molecule is in a branched/pendant conformation, in which the fluoroalkylene group(s) and the polyoxyalkylene group(s) are attached to the polysiloxane backbone in non-terminal positions. This allows more than one of each group per polysiloxane molecule. Examples of possible synthetic routes are disclosed in US 5,446,114.

This type of fluorinated oils appears to provide certain advantages. Without being bound to any particular theory, it is believed (i) that the migration of the oils to the surface of the coating during curing may be higher due to the fluorination; (ii) that the fluorination may lower the affinity of the oil to adsorb to pigments compared to non-fluorinated analogues.

Commercially available examples of such oils are Fluorosil 2110, a perfluoro nonyl ethyl PEG-8 dimethicone and C1910, a fluorinated silicone polyether of the same generic structure as Fluorosil 2110.

It should be understood that the one or more non-reactive fluorinated oil(s) may be of different types, e.g. two or more of the types described above.

The one or more fluorinated oils are typically included in the coating composition in an amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-3 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

Also, if present together with one or more hydrophilic-modified polysiloxane oils, the one or more fluorinated oils and the one or more hydrophilic-modified polysiloxane oils are typically included in the coating composition in a combined amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-5 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 2-6 % by dry weight, or 3-5 % by dry weight, or 4-8 % by dry weight, of the coating composition.

### Polysiloxane-based binder matrix

The fouling release coat of the invention has included therein a polysiloxane-based binder matrix. The binder is in the form of a cross-linked matrix which incorporates the one or more non-reactive fluorinated oils as well as other constituents, e.g. biocides, additives, pigments, fillers, etc., in the fouling release coat.

Hence, it should be understood that the polysiloxane-based binder matrix is made up of reactive polysiloxane binder components, e.g. functional organopolysiloxanes, cross-linkers, silicates (e.g. ethyl silicate), and the like. Thus, it is believed that the reaction between such components will result in the binder matrix in the form of a typically three-dimensional covalently interconnected network.

The cured paint coat may be formed in various ways, e.g. polymerization/cross-linking by formation of siloxane bonds through a condensation reaction or by the use of their reactive groups such as for example amine/epoxy, carbinol/isocyanate etc. Condensation reaction is preferred.

The polysiloxane-based binder matrix is prepared from a polysiloxane based binder which is a functional organopolysiloxane, with terminal and/or pendant functionality. The terminal functionality is preferred. The functionality can either be hydrolysable groups, such as for example alkoxy groups, ketoxime groups or the functionality can be silanol groups. A minimum of two reactive groups per molecule is preferred. If the molecule contains only two reactive groups, for example silanol groups, it may be necessary to use an additional reactant, a cross-linker, to obtain the desired cross-link density. The cross-linker can for example be an alkoxy silane such as methyltrimethoxysilane, but a wide range of useful silanes are available as will be described further on. The silane can be used as it is or as hydrolysation-condensation products of same. Although condensation cure is much preferred, the functionality of the organopolysiloxane is not limited to a condensation cure. If so desired, other types of curing can be utilized, for example amine/epoxy either alone or in combination with a condensation reaction. In such cases, the organopolysiloxane can have terminal groups of epoxy or amine and pendant hydrolysable groups, for example with alkoxyfunctionality.

In some embodiments, the fouling release coating composition including the polysiloxane-based binder system may be a reaction-curable composition or a condensation-curable composition as will be evident for the person skilled in the art. Examples hereof are a two-component condensation curing composition based on a silanol-reactive polydiorganosiloxane and a silane with hydrolysable groups, or a one-component condensation-curable composition based on a polydiorganosiloxane with alkoxy or other hydrolysable reactivity. Another example is a reaction curable composition based on an epoxy-functional polysiloxane binder and an amine functional polysiloxane curing agent. Combinations of reaction-curable compositions and condensation-curable compositions are possible, if the binder or the curing agent (or both) includes condensation curable groups, such as alkoxy groups.

In one embodiment, the binder phase comprises (i) a binder and (ii) a cross-linking agent of which the binder (i) should include hydrolysable groups or other reactive groups so as to participate in the formation of the matrix.

The binder (i) typically constitutes 20-90 % by dry weight of the coating composition.

The cross-linking agent (ii) preferably constitutes 0-10 % by dry weight of the coating composition and is, e.g., an organosilicon compound represented by the general formula (2) shown below, a partial hydrolysis-condensation product thereof, or a mixture of the two:

Rₐ-Si-X₄₋ₐ (2)

wherein, each R represents, independently, an unsubstituted or substituted monovalent hydrocarbon group of 1 to 6 carbon atoms or a hydrolysable group, each X represents, independently, a hydrolysable group, and a represents an integer from 0 to 2, such as from 0 to 1.

The compound outlined in formula (2) acts as a cross-linker for the binder (i). The composition can be formulated as a one component curable RTV (room-temperature vulcanizable) by admixing the binder (i) and the cross-linking agent (ii). If the reactivity on the terminal Si-group of the binder (i) consist of readily hydrolysable groups, such as dimethoxy or trimethoxy, a separate cross-linker is usually not necessary to cure the film. The technology behind the curing mechanism and examples of cross-linkers is described in prior art (US 2004/006190).

In one embodiment, R represents a hydrophilic group such as a poly(oxyalkylene). In this case, it is preferred to have a C₂₋₅-alkyl spacer between the Si-atom and the polyoxyalkylene group. Hence, the organopolysiloxane may have oxyalkylene domains.

Preferred cross-linkers are those selected from tetramethoxysilane, tetraethoxysilane; tetrapropoxysilane; tetra-n-butoxysilane; vinyltris(methylethyloximino)silane; vinyltris-(acetoxime)silane; methyltris(methylethyloximino)silane; methyltris(acetoxime)silane; vinyltrimethoxysilane; methyltrimethoxysilane; vinyltris(isopropenoxy)silane; tetraacetoxysilane; methyltriacetoxysilane; ethyltriacetoxysilane; vinyltriacetoxysilane; di-t-butoxydiacetoxysilane; methyltris(ethyllactate)silane and vinyltris(ethyllactate)silane as well as hydrolysis-condensation products of the same.

Other interesting cross-linkers are those selected from vinyltriethoxysilane, methyltriethoxysilane, ethyltrimethoxysilane, ethyltrimethoxysilane, tetraisopropoxysilane, tetrabutoxysilane as well as hydrolysis-condensation products of the same.

In some interesting embodiments, the polysiloxane-based binder comprises a polydimethylsiloxane-based binder.

In other interesting embodiments, the binder may include fluoro-modifications, e.g. fluoroalkyl modified polysiloxane binders such as silanol-terminated poly(trifluoropropylmethylsiloxane).

The polysiloxane-based binder matrix typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the coating composition.

### Hydrophilic-modified polysiloxane oils

The fouling release coat may further include hydrophilic-modified polysiloxane oils, i.e. constituents which do not form covalent bonds to the polysiloxane-based binder matrix. Hydrophilic-modified polysiloxane oils are widely used as surfactants and emulsifiers due to the content of both hydrophilic and lipophilic groups in the same molecule. In contrast to the polysiloxane components discussed above, the hydrophilic-modified polysiloxane oils are selected so that they do not contain groups that can react with the binder (or binder components) or the cross-linker (if present), hence the hydrophilic-modified polysiloxane oils are intended to be non-reactive, in particular with respect to the binder components. In particular, the hydrophilic-modified polysiloxane oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

The non-reactive hydrophilic-modified polysiloxane oils are typically modified by the addition of non-ionic oligomeric or polymeric groups which can be polar and/or capable of hydrogen bonding, enhancing their interaction with polar solvents, in particular with water, or with other polar oligomeric or polymeric groups. Examples of these groups include, amides (e.g. poly(vinyl pyrrolidone), poly[N-(2-hydroxypropyl)methacrylamide]), poly(N,N-dimethacrylamide), acids (e.g. poly(acrylic acid)), alcohols (e.g. poly(glycerol), polyHEMA, polysaccharides, poly(vinyl alcohol)), ketones (polyketones), aldehydes (e.g. poly(aldehyde guluronate), amines (e.g. polyvinylamine), esters (e.g. polycaprolactones, poly(vinyl acetate)), ethers (e.g. polyoxyalkylenes like poly(ethylene glycol), poly(propylene glycol)), imides (e.g. poly(2-methyl-2-oxazoline)), etc., including copolymers of the foregoing. Preferably the hydrophilicity is obtained by modification with polyoxyalkylene groups.

As before, it should be understood that the hydrophilic oligomer/polymer moieties with which the polysiloxane oils are modified are of non-silicon origin. Preferably, the above-mentioned "oligomers" and "polymers" include at least 3 repeating units, such as at least 5 repeating units. In many interesting embodiments, the oligomers or polymers include 3-1,000 repeating units, such as 3-200, or 5-150, or 5-100 repeating units.

In some preferred embodiments, the hydrophilic groups (i.e. oligomeric or polymeric groups) have a number average molecular weight (Mₙ) in the range of 100-50,000 g/mol, such as in the range of 100-30,000 g/mol, in particular in the range of 200-20,000 g/mol, or in the range of 200-10,000 g/mol.

In the present description with claims, the term "hydrophilic-modified" in the context of "hydrophilic-modified polysiloxane oil" is intended to mean that the oligomeric or polymeric groups with which the polysiloxane is modified, in themselves (i.e. as discrete molecules) have a solubility of at least 1 %(w/w) in demineralized water at 25°C.

Of particular interest are those hydrophilic-modified polysiloxane oils in which the relative weight of the hydrophilic moieties is 1% or more of the total weight (e.g. 1-90%), such as 5% or more (e.g. 5-80%), in particular 10% or more (e.g. 10-70%) of the total weight of the hydrophilic-modified polysiloxane oil.

In a preferred embodiment, the hydrophilic-modified polysiloxane oil (if present) has a number average molecular weight (Mₙ) in the range of 100-100,000 g/mol, such as in the range of 250-75,000 g/mol, in particular in the range of 500-50,000 g/mol.

It is also preferred if the hydrophilic-modified polysiloxane oils (if present) have a viscosity in the range of 10-20,000 mPa·s, such as in the range of 20-10,000 mPa·s, in particular in the range of 40-5,000 mPa·s.

The hydrophilic-modified polysiloxane oils may be utilized to control the leaching of the one or more biocides.

In one currently preferred embodiment, the hydrophilic-modified polysiloxane oil is a poly(oxyalkylene)-modified polysiloxane.

In one variant hereof, the poly(oxyalkylene)-modified polysiloxane oil is a polysiloxane having grafted thereto poly(oxyalkylene) chains. An illustrative example of the structure of such hydrophilic-modified polysiloxane oils is formula (A): 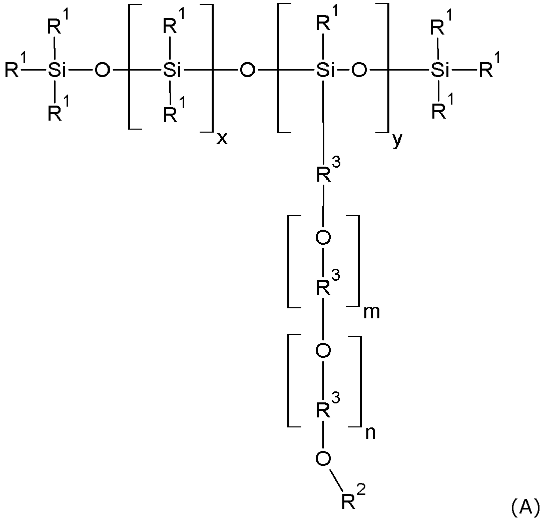 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; and n is 0-50, m is 0-50 and m+n is 1-50.

Commercially available hydrophilic-modified polysiloxane oils of this type are DC5103 (Dow Corning), DC Q2-5097 (Dow Corning), and DC193 (Dow Corning).

In another variant hereof, the poly(oxyalkylene)-modified polysiloxane oil is a polysiloxane having incorporated in the backbone thereof poly(oxyalkylene) chains. An illustrative example of the structure of such hydrophilic-modified polysiloxane oils is formula (B): 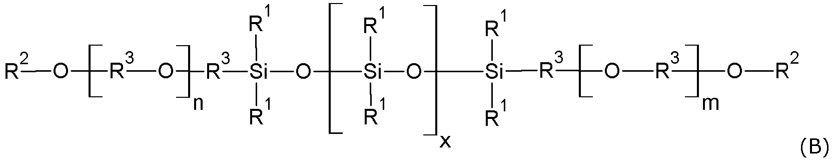 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500; and n is 0-50, m is 0-50 and m+n is 1-50.

Commercially available hydrophilic-modified polysiloxane oils of this type are DC Q4-3669 (Dow Corning), DC Q4-3667 (Dow Corning) and DC2-8692.

In still another variant hereof, the poly(oxyalkylene)-modified polysiloxane oil is a polysiloxane having incorporated in the backbone thereof polyoxyalkylene chains and having grafted thereto polyoxyalkylene chains. An illustrative example of the structure of such hydrophilic-modified polysiloxane oils is formula (C): 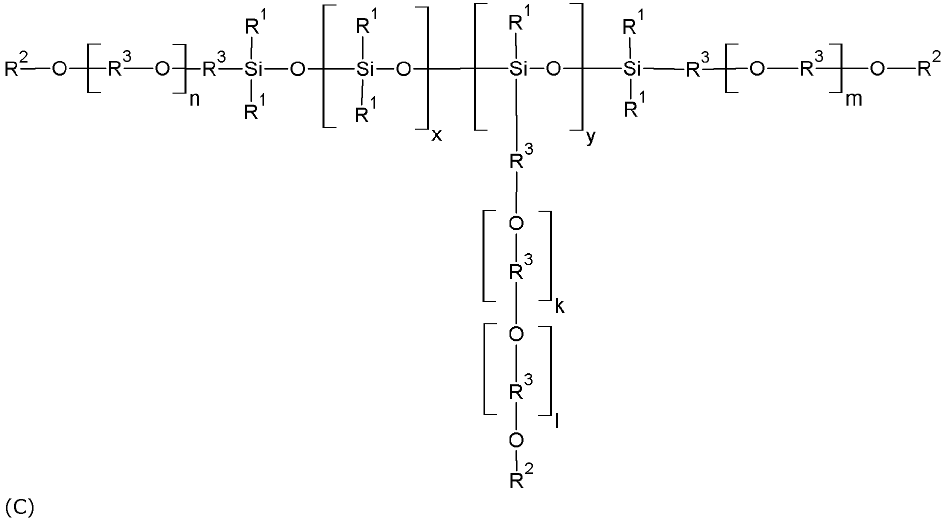 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; k is 0-50, l is 0-50 and k+l is 1-50; and n is 0-50, m is 0-50 and m+n is 1-50.

In the above structures (A), (B) and (C), the groups -CH₂CH(CH₃)-, -CH₂CH(CH₂CH₃)-, etc. may be present in any of the two possible orientations. Similarly, it should be understood that the segments present x and y times typically are randomly distributed, or distributed as blocks, within the polysiloxane structure.

In these embodiments and variants, the poly(oxyalkylene) is preferably selected from polyoxyethylene, polyoxypropylene and poly(oxyethylene-co-oxypropylene), which sometimes are referred to as poly(ethylene glycol), poly(propylene glycol) and poly(ethylene glycol-co-propylene glycol). Hence, in the above structures (A), (B) and (C), each R³ linking two oxygen atoms is preferably selected from -CH₂CH₂- and -CH₂CH(CH₃)-, whereas each R³ linking a silicon atom and an oxygen atom preferably is selected from C₂₋₅-alkyl.

It should be understood that the one or more non-reactive hydrophilic-modified polysiloxane oils if present may be of different types, e.g. two or more of the types described above.

If present, the one or more hydrophilic-modified polysiloxane oils are typically included in the coating composition in an amount of 0.01-20 %, e.g. 0.05-10 %, by dry weight. In certain embodiments, the one or more hydrophilic-modified polysiloxane oils constitutes 0.05-7 % by dry weight, e.g. 0.1-5 % by dry weight, in particular 0.5-3 % by dry weight, of the coating composition. In certain other embodiments, the one or more hydrophilic-modified polysiloxane oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

### Hydrophilic modification of the binder matrix

In some interesting embodiments, the binder matrix has included as a part thereof hydrophilic oligomer/polymer moieties.

In one embodiment, the binder includes a curable diorganopolysiloxane represented by a general formula (1) shown below: 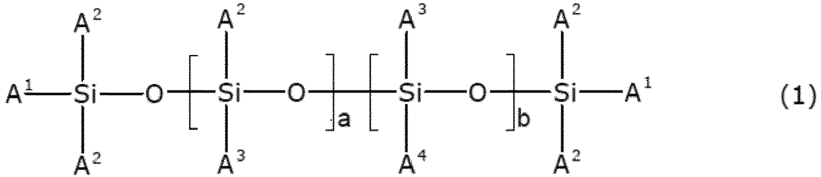 wherein each A¹ is independently selected from a hydroxyl group, a hydrolysable group and another functional group, such as amine or epoxy; each A² is independently selected from alkyl, aryl, alkenyl and a hydrolysable group; each A³ and A⁴ is independently selected from alkyl, aryl alkenyl and a hydrophilic group, such as a polyoxyalkylene group, wherein, if A³ and/or A⁴ is a hydrophilic group, such as a polyoxyalkylene group, such group may be attached to the silicon atom via a C₂₋₅-alkylene linker; a = 1-25,000, b = 1-2,500 and a+b is at least 5.

In one alternative embodiment, the binder includes a curable diorganopolysiloxane represented by a general formula (1x) shown below: 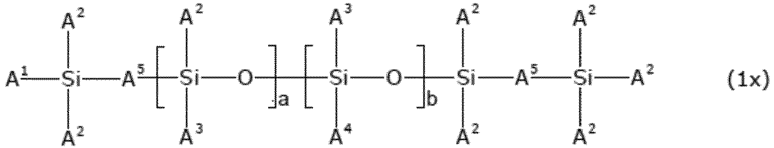 wherein each of A¹, A², A³, A⁴, a and b are as above for formula (1) and wherein each A⁵ is independently selected from oxygen or an alkyl group of 2-5 carbon atoms.

In another embodiment, the polysiloxane binder has hydrophilic oligomer/polymer moieties grafted as side chains (pendant hydrophilic groups), as depicted below, and can be prepared by a hydrosilylation reaction between a hydride functional polysiloxane and a hydrophilic component containing an unsaturated group (-CH=CH₂) such as for example an allyl or vinyl group, in presence of a hydrosilylation catalyst, such as platinum, in accordance with formula (1c), where the example of a hydrophilic compound is an allyl-terminated poly(ethylene glycol). The synthesis is carried out at elevated temperatures, such as 60-150°C. To render the polymer curable, it is necessary to functionalise it with a hydrolysable, or by other means reactive, group, such as vinyltrimethoxysilane. The reaction is following same principles as when grafting the hydrophilic compound to the polysiloxane, and it is outlined in formula (1b), and the functionalization may be done, but not necessarily, prior to the bonding of a hydrophilic group.

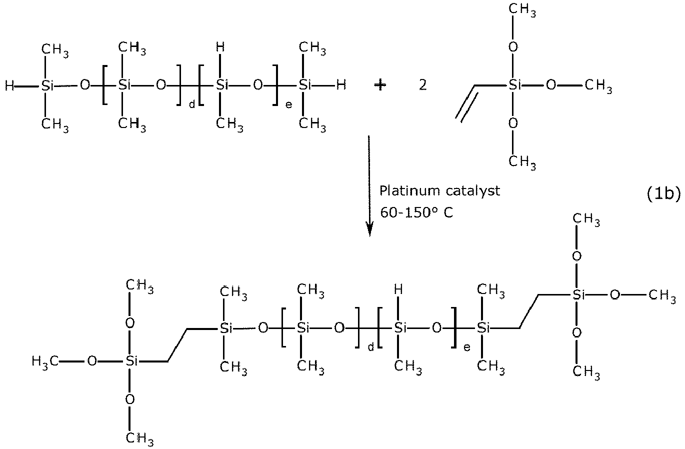

The resulting binder from the reaction (1b) is further modified with a hydrophilic component, for example poly(ethylene glycol) mono allyl ether as outlined in formula (1c) resulting in a curable, polysiloxane modified with hydrophilic oligomer/polymer moieties.

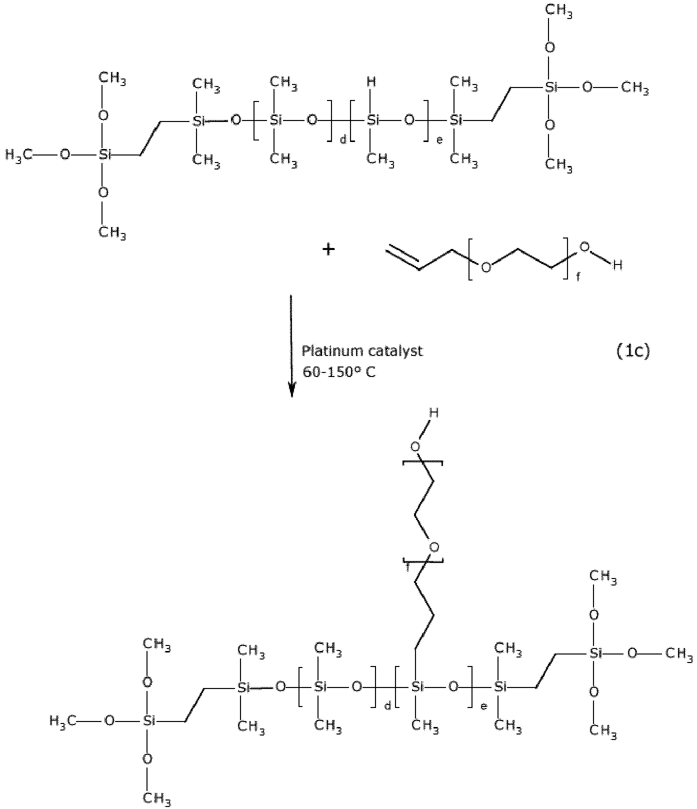

The binder obtained can be used as is, or in combination with a curable diorganosiloxane (of the generic type presented in formula 1). As previously described, hydrophilic polymers other than poly(ethylene glycol) are also useful for rendering the polysiloxane hydrophilic.

It is possible to graft the hydrophilic pendant moieties to the polysiloxane prior to grafting the hydrolysable silane to the polysiloxane (i.e. in reverse order than the synthesis described in formulae (1b) and (1c).

Hence, in one interesting embodiment, the cured paint coat comprising a polysiloxane-based binder matrix has included as a part thereof pendant hydrophilic oligomer/polymer moieties.

The expression "pendant" means that the hydrophilic oligomer/polymer moieties are attached to the polysiloxane backbone at a non-terminal position and that such moieties are attached at only the one end so that the pendant hydrophilic oligomer/polymer forms a "graft" to the polysiloxane backbone (matrix). This is can also be referred to as "branched".

Pendant hydrophilic oligomers/polymer moieties may in principle at the free end carry functional (non-reactive) groups at the free end, e.g. groups exhibiting a biocidal effect, etc. However, in most embodiments, the hydrophilic oligomers/polymer moieties are not carrying such functional groups, but are in the form of the native oligomer/polymer form, possibly end-capped, like with an alkyl group, or possibly with a hydroxyl group or methoxy terminated.

Another variation of the binder is an A-B-A copolymer of polysiloxane (A) and a hydrophilic polymer (B), such as poly(oxyalkylene). An example of the structure of the polymer is depicted in formula (1d). In this variation, units of a polymer with hydrophilic character, such as polyoxyalkylene are introduced in the backbone of the polysiloxane to form an alternating block copolymer. Introducing hydrophilic groups such as oxyalkylene groups in the binder may increase the hydrophilicity of the binder as described in reference WO 2008/132196. The binders can be used alone or in combination, and the structure of the copolymer can be A-B-A and B-A-B. In case of B-A-B, a pendant curable functionality is required, since the terminal groups of the silicone portion would be blocked by the hydrophilic polymer.

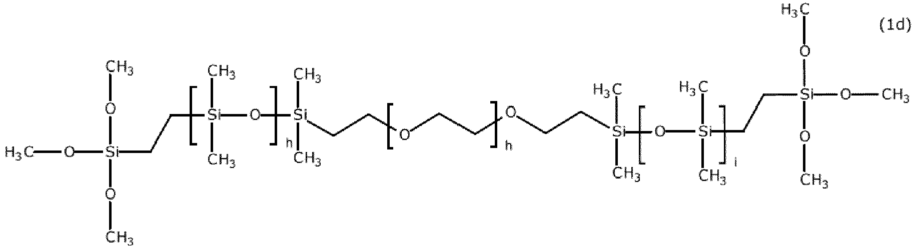

In yet another variant, the hydrophilic component is obtained by hydrosilylation of a polyoxyalkylene compound containing at least one, unsaturated group (-CH=CH₂) such as an allyl or a vinyl group, with a silane having a hydride group, e.g. HSi(R*)₃ groups, wherein each R* independently is selected from C₁₋₄-alkyl and C₁₋₄-alkoxy (e.g. methyl, ethyl, propyl, butyl, methoxy, ethoxy, propoxy, and butoxy), at least one being C₁₋₄-alkoxy, such as for example trimethoxysilane, triethoxysilane or methyldimethoxysilane, in the presence of a hydrosilylation catalyst, such as platinum, yielding a curable poly(oxyalkylene). The reaction is carried out at elevated temperatures, such as 60-150°C. The synthesis is outlined in formula (1e). The polymer has to be used in combination with, e.g., component (i) (formula 1). Further examples of useful silanes include, without being limited to, triethoxysilane, tripropoxysilane, tert-butyldiethoxysilane.

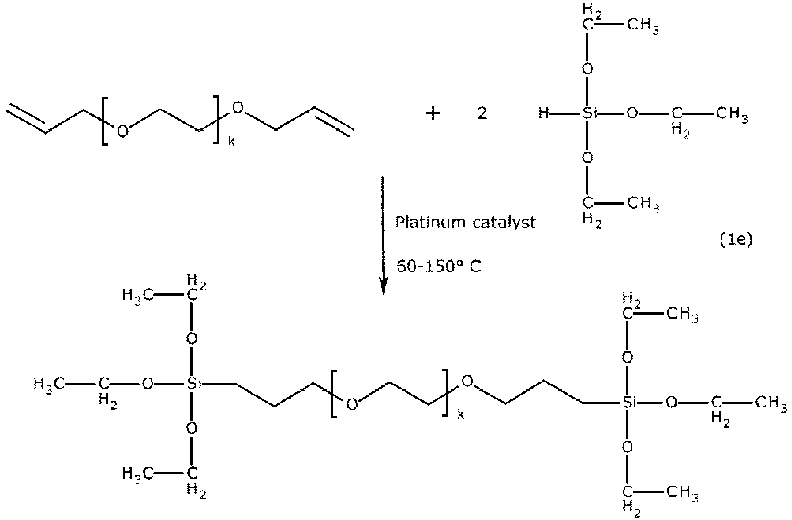

In one variant, the hydrophilicity may be obtained (or added to the hydrophilicity which may have been obtained by incorporating a hydrophilic group to binder (i) as outlined in previous section), by using a hydrophilic silane, such as the generic type expressed in formula (2a). The hydrophilic silane will react with the silanol or the hydrolysable groups in the binder component (formulae (1) or (1e)), and thereby incorporate a hydrophilic component. 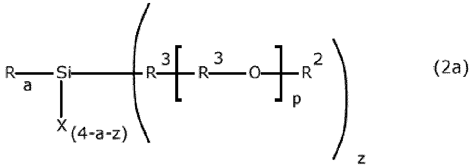 wherein, each R represents, independently, an unsubstituted or substituted monovalent hydrocarbon group of 1 to 6 carbon atoms or a hydrolysable group, each X represents, independently, a hydrolysable group, each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-); p is 0-50; a is 0-2; z is 1-3.

Introducing oxyalkylene units in the organopolysiloxane will increase the hydrophilicity of the binder, especially when ethyleneoxide type -[CH₂CH₂-O]- is used.

Without being bound to any particular theory, it is believed that the function of the polysiloxane-based binder matrix rendered hydrophilic by means of oligomer/polymer moieties is to facilitate the transport and accessibility of the one or more biocides at the surface upon contact with sea-water. Potentially, a hydrated layer formed at the coating-water interphase will also aid in retaining the biocide at the surface, hence allowing the coating to exert its fouling deterrent activity for extended exposure intervals.

In a further embodiment, the hydrophilic modification of the binder consists of both A-B-A modifications (as described above) and of pendant hydrophilic oligomer/polymer moieties.

It should be understood that the hydrophilic oligomer/polymer moieties forms a part of the polysiloxane-based binder matrix, i.e. that the moieties are covalently incorporated into the binder matrix. It should also be understood that the formed covalent bond(s) preferably are non-hydrolysable.

The polysiloxane-based binder matrix typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the cured paint coat.

The term "polysiloxane-based binder matrix" is intended to mean that the binder matrix mainly consists of polysiloxane parts, i.e. that more than 50 % by weight, preferably more than 60 % by weight, e.g. more than 70 % by weight, of the binder matrix is represented by polysiloxane parts. Preferably the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder matrix (i.e. the binder components and any cross-linkers). The remainder of the binder matrix is e.g. made of any hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder matrix.

It should of course be understood that the hydrophilic oligomer/polymer moieties which are included in the polysiloxane-based binder matrix are of non-silicon origin.

When calculating the amount of the polysiloxane parts and the hydrophilic oligomer/polymer moieties, respectively, for a given starting material (or an adduct), it is typically fairly straightforward to distinguish between the two. However, in order to eliminate any doubt about any linkers between the two, it should be understood that the hydrophilic oligomer/polymer moieties include all atoms up to, but not including, the silicon atom which is adjacent to the hydrophilic oligomer/polymer moiety. As an example, in a structure of the type [polysiloxane-O]-Si(Me)₂-CH₂CH₂CH₂-[hydrophilic oligomer]-CH₂CH₂CH₂-Si(Me)₂-[O-polysiloxane], the [polysiloxane-O]-Si(Me)₂ parts are accounted for as silicone parts, whereas the CH₂CH₂CH₂-[hydrophilic oligomer]-CH₂CH₂CH₂ moiety is accounted for as the hydrophilic oligomer moiety.

Suitable hydrophilic oligomer/polymer moieties are those selected from poly(vinyl pyrrolidone), poly[N-(2-hydroxypropyl)methacrylamide], poly(N,N-dimethacrylamide), poly(acrylic acid), poly(glycerol), polyHEMA, polysaccharides, poly(vinyl alcohol), polyketones, poly(aldehyde guluronate), polyvinylamine, polycaprolactones, poly(vinyl acetate), polyoxyalkylenes like poly(ethylene glycol), poly(propylene glycol), poly(2-methyl-2-oxazoline), etc., including copolymers of the foregoing. Preferably the hydrophilicity is obtained by modification with polyoxyalkylene moieties.

Incorporation of the above mentioned hydrophilic oligomer/polymer into the polysiloxane polymer backbone is typically done through a linking group. The linking group is understood as the product of the reaction of two mutually reaction functional groups; one functional group on the polysiloxane backbone and one on the hydrophilic oligomer/polymer. E.g. an amine linking group is result of for example - but not exclusively - the reaction of a glycidyl ether with a primary or secondary amine. Examples of useful linking groups between the hydrophilic oligomer/polymer and the polysiloxane backbone are: amine groups, ether groups, amide groups. 1,2,3-triazole, C-C bonds, C-C double bonds, C-C triple bonds, Si-C bonds, C-S bonds, S-S bonds, urethane group, urea groups. Most preferred linking group is the Si-C bond prepared by hydrosilylation reaction catalyzed by platinum where the functional group on the polysiloxane backbone is a hydride and the functional group on the hydrophilic oligomer/polymer is an allyl group.

In some embodiments, it is preferred that the hydrophilic oligomer/polymer moieties provide a permanent hydrophilic contribution to the binder matrix. Hence, in such embodiments, the hydrophilic oligomer/polymer moieties are preferably devoid of any bonds which are hydrolysable in sea-water. Hence, preferably, the hydrophilic oligomer/polymer moieties do not include ester bonds or acid anhydride bonds.

In the present context oligomer/polymer moieties are understood as those encompassing at least 3 repeating units, such as at least 5 repeating units. Typically, oligomer/polymer moieties used for modification include 3-1,000 repeating units, such as 3-200, or 5-150, or 5-100, or 10-80, or 5-20, repeating units.

In some preferred embodiments, the hydrophilic oligomer/polymer moieties (i.e. oligomeric or polymeric groups incorporated into the binder matrix) have a number average molecular weight (Mₙ) in the range of 100-50,000 g/mol, such as in the range of 100-30,000 g/mol, in particular in the range of 150-20,000 g/mol, or in the range of 200-10,000 g/mol.

In the present description with claims, the terms "hydrophilic oligomer/polymer moieties", "hydrophilic polymer moieties", and similar are intended to mean that the oligomeric or polymeric moieties, in themselves (i.e. when represented as discrete molecules) have a solubility of at least 1 %(w/w) in demineralized water at 25°C.

When the polysiloxane-based binder system discussed above is characterized by having included therein, as a part of the binder matrix, one or more polysiloxane components which are modified with hydrophilic oligomer/polymer moieties, such polysiloxane components will upon reaction with other polysiloxane components and cross-linkers provide hydrophilic properties to the binder system. Alternatively, hydrophilic oligomer/polymer moieties functionalized with reactive silanes which enable them to react with the polysiloxane binder, or the hydrophilic oligomer/polymer moieties, and form a non-hydrolysable bond, may also be used.

The polysiloxane components must include silicon-reactive groups such as Si-OH groups, hydrolysable groups such as Si-OR (such as alkoxy, oxime, acetoxy etc.) groups, etc., so as to facilitate reaction with other constituents of the polysiloxane-based binder system.

In one currently preferred embodiment of the above, the hydrophilic oligomer/polymer moiety is a poly(oxyalkylene) moiety.

### Biocides

The coating composition used for forming the cured fouling release coat may include one or more biocides.

In the present context, the term "biocide" is intended to mean an active substance intended to destroy, deter, render harmless, prevent the action of, or otherwise exert a controlling effect on any harmful organism by chemical or biological means.

Illustrative examples of biocides are those selected from metallo-dithiocarbamates such as bis(dimethyldithiocarbamato)zinc, ethylene-bis(dithiocarbamato)zinc, ethylene-bis(dithio-carbamato)manganese, and complexes between these; bis(1-hydroxy-2(1H)-pyridine-thionato-O,S)-copper; copper acrylate; bis(1-hydroxy-2(1H)-pyridinethionato-O,S)-zinc; phenyl(bispyridyl)-bismuth dichloride; metal biocides such as copper(I)oxide, cuprous oxide, metallic copper, copper metal alloys such as copper-nickel alloys; metal salts such as cuprous thiocyanate, basic copper carbonate, copper hydroxide, barium metaborate, and copper sulphide; heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine®-211N), 1,2-benzisothiazolin-3-one, and 2-(thiocyanatomethylthio)-benzothiazole; urea derivatives such as N-(1,3-bis(hydroxylmethyl)-2,5-dioxo-4-imidazolidinyl)-N,N'-bis(hydroxymethyl)urea, and N-(3,4-dichlorophenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethyl-amines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethylamino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole and mixtures thereof.

Presently, it is preferred that the biocide (if present) does not comprise tin.

Currently preferred biocides are those selected from the group consisting of 2,4,5,6-tetra-chloroisophtalonitrile (Chlorothalonil), copper thiocyanate (cuprous sulfocyanate), N-dichloro-fluoromethylthio-N',N'-dimethyl-N-phenylsulfamide (Dichlofluanid), 3-(3,4-dichlorophenyl)-1,1-dimethylurea (Diuron), N²-tert-butyl-N⁴-cyclopropyl-6-methylthio-1,3,5-triazine-2,4-diamine (Cybutryne), 4-bromo-2-(4-chlorophenyl)-5-(trifluoromethyl)-1H-pyrrole-3-carbonitrile, (2-(p-chlorophenyl)-3-cyano-4-bromo-5-trifluoromethyl pyrrole; Tralopyril), *N*²-*tert*-butyl-*N*⁴-cyclopropyl-6-methylthio-1,3,5-triazine-2,4-diamine (Cybutryne), (RS)-4-[1-(2,3-dimethylphenyl)ethyl]-3H-imidazole (Medetomidine), 4,5-dichloro-2-n-octyl-4-isothiazolin-3-one (DCOIT, Sea-Nine® 211N), dichlor-N-((dimethylamino)sulfonyl)fluor-N-(p-tolyl)methansulfenamid (Tolylfluanid), 2-(thiocyanomethylthio)-1,3-benzothiazole ((2-benzothiazolylthio)methyl thiocyanate; TCMTB), triphenylborane pyridine (TPBP); bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione), zinc ethylene-1,2-bis-dithiocarbamate (zinc-ethylene-N-N'-dithiocarbamate; Zineb), copper(i) oxide, metallic copper, 3-(3,4-dichlorophenyl)-1,1-dimethylurea (Diuron) and diiodomethyl-p-tolylsulfone; Amical 48. Preferably at least one biocide is selected from the above list.

In a particularly preferred embodiment, the biocides are preferably selected among biocides which are effective against soft fouling such as slime and algae. Examples of such biocides are N²-tert-butyl-N⁴-cyclopropyl-6-methylthio-1,3,5-triazine-2,4-diamine (Cybutryne), 4,5-dichloro-2-n-octyl-4-isothiazolin-3-one (DCOIT, Sea-Nine® 211N), bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione; Copper Omadine) and zinc ethylene-1,2-bis-dithiocarbamate (zinc-ethylene-N-N'-dithiocarbamate; Zineb), copper(I) oxide, metallic copper, copper thiocyanate, (cuprous sulfocyanate), bis(1-hydroxy-2(1H)-pyridinethionato-O,S)-T-4) copper (copper pyridinethione; copper pyrithione; Copper Omadine).

In a further particularly preferred embodiment, the one or more biocides comprise, or is, an organic biocide, such as a pyrithione complex, such as zinc pyrithione, or such as copper pyrithione. Organic biocides are those either fully or in part being of organic origin.

As detailed in US 7,377,968, in those instances in which the biocide is depleted rapidly from the film due to e.g. a high water solubility or a high level of immiscibility with the matrix composition, it can be advantageous to add one or more of the biocide(s) in encapsulated form as a means of controlling the biocide dosage and extending the effective lifetime in the film. Encapsulated biocides can also be added if the free biocide alters the properties of the polysiloxane matrix in a way that is detrimental for its use as antifouling coatings (e.g. mechanical integrity, drying times, etc.).

In a particularly preferred embodiment, the biocide is encapsulated 4,5-dichloro-2-n-octyl-4-isothiazolin-3-one (Sea-Nine® CR2).

The biocide preferably has a solubility in the range of 0-20 mg/L, such as 0.00001-20 mg/L, in water at 25 °C.

If present, the biocide typically constitutes 0.1-15 % by dry weight, e.g. 0.5-8 % by dry weight, in particular 1-6 % by dry weight, of the coating composition.

The biocide typically constitutes 0.1-15 % by solids volume, e.g. 0.5-8 % by solids volume, in particular 1-6 % by solids volume, of the coating composition.

If one or more biocides are included, the ratio between on the one hand the combined amount of the hydrophilic oligomer/polymer moieties of the binder matrix (if present; see below) and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:12, or 1:0.1 to 10, even 1:0.15 to 1:6, or 1:0.1 to 1:5, or 1:0.2 to 1:4. In other embodiments, the ratio between on the one hand the combined amount of the hydrophilic oligomer/polymer moieties of the binder matrix (if present; see below) and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:14, or 1:0.1 to 12, even 1:0.15 to 1:10, or 1:0.05 to 1:9, or 1:0.1 to 1:8, or 1:0.2 to 1:7.

### Catalyst

The coating composition used for forming the cured fouling release coat may further comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexanoate, dioctyl tin dilaurate, dioctyl tin diacetate, dioctyl tin dioctoate, dioctyl tin 2-ethylhexanoate, dioctyltin di neodecanoate, tin naphthenate, tin butyrate, tin oleate, tin caprylate, bismuth 2-ethylhexanoate, bismuth octanoate, bismuth neodecanoate, iron 2-ethylhexanoate, lead 2-ethyloctoate, cobalt-2-ethylhexanoate, manganese 2-ethylhexanoate, zinc 2-ethylhexanoate, zinc naphthenate, zinc stearate, cobalt naphthenate and titanium naphtenate; titanate- and zirconate esters such as tetrabutyl titanate, tetrakis(2-ethylhexyl)titanate, triethanolamine titanate, tetra(isopropenoxy)titanate, titanium tetrabutanolate, titanium tatrapropanolate; titanium tetraisopropanolate, zirconium tetrapropanolate, zirconium tetrabutanolate; chelated titanates such as diisopropyl bis(acetylacetonyl)titanate. Further catalysts include tertiary amines, such as triethylamine, tetrametylethylenediamine, pentamethyldiethylenetriamine and 1,4-ethylenepiperazine. Further examples include guanidine based catalysts. Even further examples of condensation catalysts are described in WO 2008/132196 and US 2004/006190.

The catalyst may be used alone or as combination of two or more catalysts. The amount of catalyst to be used is depending on the reactivity of the catalyst and the cross-linker(s) and desired drying time. In a preferred embodiment the catalyst concentration is between 0.01-10 %, e.g. 0.01-3.0 %, or 5.0-10 %, or 0.1-4.0 %, or 1.0-6.0 %, by weight of the total combined amount of the binder (i) and cross-linking agent (ii).

In some embodiments, a catalyst is not included.

### Solvents, additives, pigments and fillers

The coating composition used for forming the cured fouling release coat may further comprise solvents and additives.

Examples of solvents are aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof. Alternatively, the solvent system may include water or be water-based (>50% water in the solvent system).

In one embodiment, the solvents are selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110 °C or more.

The solvents, if any, typically constitute 5-50 % by volume of the coating composition.

Examples of additives are:
(i) non-reactive fluids such as organopolysiloxanes; for example polydimethylsiloxane, methylphenyl polysiloxane; petroleum oils and combinations thereof;
(ii) surfactants such as derivatives of propylene oxide or ethylene oxide such as alkylphenol-ethylene oxide condensates (alkylphenol ethoxylates); ethoxylated monoethanolamides of unsaturated fatty acids such as ethoxylated monoethanolamides of linoleic acid; sodium dodecyl sulfate; and soya lecithin;
(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
(iv) thickeners and anti-settling agents (e.g. thixotropic agents) such as colloidal silica, hydrated aluminium silicate (bentonite), aluminium tristearate, aluminium monostearate, xanthan gum, chrysotile, pyrogenic silica, hydrogenated castor oil, organo-modified clays, polyamide waxes and polyethylene waxes;
(v) dyes such as 1,4-bis(butylamino)anthraquinone and other anthraquinone derivatives; toluidine dyes, etc.; and
(vi) antioxidants such as bis(tert-butyl) hydroquinone, 2,6-bis(tert-butyl) phenol, resorcinol, 4-tert-butyl catechol, tris(2,4-di-tert-butylphenyl)phosphite, pentaerythritol Tetrakis(3-(3,5-di-tert-butyl-4-hydroxyphenyl)propionate), bis(2,2,6,6,-tetramethyl-4-piperidyl)sebacate, etc.

Any additives typically constitute 0-30 %, such as 0-15 %, by dry weight of the coating composition.

Preferably, the coating composition comprises one or more thickeners and/or anti-settling agents (e.g. thixotropic agents), preferably in an amount of 0.2-10 %, such as 0.5-5 %, e.g. 0.6-4 %, by dry weight of the coating composition.

Furthermore, the coating composition used for forming the cured fouling release coat may comprise pigments and fillers.

Pigments and fillers are in the present context viewed in conjunction as constituents that may be added to the coating composition with only limited implications on the adhesion properties. "Pigments" are normally characterised in that they render the final paint coating non-transparent and non-translucent, whereas "fillers" normally are characterised in that they do not render the paint non-translucent and therefore do not contribute significantly to hide any material below the coating.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the coating composition may also comprise fibres, e.g. those generally and specifically described in WO 00/77102 which is hereby incorporated by reference.

Any pigments and/or fillers typically constitute 0-60 %, such as 0-50 %, preferably 5-45 %, such as 5-40 %, or 5-35 %, or 0.5-25 %, or 1-20 %, by dry weight of the coating composition. Taking into account the density of any pigments and/or fillers, such constituents typically constitute 0.2-20 %, such as 0.5-15 % by solids volume of the coating composition

With the aim of facilitating easy application of the coating composition (e.g. by spray, brush or roller application techniques), the coating composition typically has a viscosity in the range of 25-25,000 mPa·s, such as in the range of 150-15,000 mPa·s, in particular in the range of 200-4,000 mPa·s.

### Preparation of the coating composition

The coating composition may be prepared by any suitable technique that is commonly used within the field of paint production. Thus, the various constituents may be mixed together utilizing a mixer, a high speed disperser, a ball mill, a pearl mill, a grinder, a three-roll mill etc. The coating compositions are typically prepared and shipped as two- or three-component systems that should be combined and thoroughly mixed immediately prior to use. The paints according to the invention may be filtrated using bag filters, patron filters, wire gap filters, wedge wire filters, metal edge filters, EGLM turnoclean filters (ex. Cuno), DELTA strain filters (ex. Cuno), and Jenag Strainer filters (ex. Jenag), or by vibration filtration. An example of a suitable preparation method is described in the Examples.

The coating composition to be used in the method of the invention is typically prepared by mixing two or more components e.g. two pre-mixtures, one pre-mixture comprising the one or more reactive polysiloxane binders and one pre-mixture comprising the one or more cross-linking agents. It should be understood that when reference is made to the coating composition, it is the mixed coating composition ready to be applied. Furthermore, all amounts stated as % by dry weight of the coating composition should be understood as % by dry weight of the mixed paint composition ready to be applied, i.e. the weight apart from the solvents (if any).

Hence, the invention also provides a kit for preparing a fouling release coat as defined herein, said kit comprising a first container holding a polysiloxane binder base, and a second container holding a siloxane curing agent and optionally a catalyst, wherein the polysiloxane binder base of the first container is curable in the presence of the content of the second container. The catalyst and curing agent may be separated in two containers to obtain an extended storage stability.

### Application of the coating composition

The coating composition of the invention is typically applied to at least a part of the surface of a substrate.

The term "applying" is used in its normal meaning within the paint industry. Thus, "applying" is conducted by means of any conventional means, e.g. by brush, by roller, by spraying, by dipping, etc. The commercially most interesting way of "applying" the coating composition is by spraying. Hence, the coating composition is preferably sprayable. Spraying is effected by means of conventional spraying equipment known to the person skilled in the art. The coating is typically applied in a dry film thickness of 50-600 µm, such as 50-500 µm, e.g. 75-400 µm, or 20-100 µm.

Moreover, the coating composition is preferably such with respect to sag resistance cf. ASTM D 4400-99 (i.e. relating to its ability to be applied in a suitable film thickness to a vertical surface without sagging) that it exhibits sag resistance for a wet film thickness up to at least 70 µm, such as up to at least 200 µm, preferably up to at least 400 µm, and in particular up to at least 600 µm.

The term "at least a part of the surface of a substrate" refers to the fact that the coating composition may be applied to any fraction of the surface. For many applications, the coating composition is at least applied to the part of the substrate (e.g. a vessel) where the surface (e.g. the ship's hull) may come in contact with water, e.g. sea-water.

The term "substrate" is intended to mean a solid material onto which the coating composition is applied. The substrate typically comprises a metal such as steel, iron, aluminium, or glass-fibre reinforced polyester. In the most interesting embodiments, the substrate is a metal substrate, in particular a steel substrate. In an alternative embodiment, the substrate is a glass-fibre reinforced polyester substrate. In some embodiments, the substrate is at least a part of the outermost surface of a marine structure.

The term "surface" is used in its normal sense, and refers to the exterior boundary of an object. Particular examples of such surfaces are the surface of marine structures, such as vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc.

The surface of the substrate may either be the "native" surface (e.g. the steel surface). However, the substrate is typically coated, e.g. with an anticorrosive coating and/or a tie coat, so that the surface of the substrate is constituted by such a coating. When present, the (anticorrosive and/or tie) coating is typically applied in a total dry film thickness of 100-600 µm, such as 150-450 µm, e.g. 200-400 µm. Alternatively, the substrate may carry a paint coat, e.g. a worn-out fouling release paint coat, or similar.

In one important embodiment, the substrate is a metal substrate (e.g. a steel substrate) coated with an anticorrosive coating such as an anticorrosive epoxy-based coating, e.g. cured epoxy-based coating, or a shop-primer, e.g. a zinc-rich shop-primer. In another relevant embodiment, the substrate is a glass-fiber reinforced polyester substrate coated with an epoxy primer coating.

This being said, the invention also relates to a method of coating a surface of a substrate, comprising the sequential steps of:
a) applying one or more layers of a primer composition and/or applying one or more layers of a tie-coat composition onto the surface of said substrate, and
b) applying one or more layers of a coating composition so as to obtain a fouling release coat as defined herein on the coated surface of said substrate.

It should be understood that the expression "fouling release" relates to all types of bio-fouling of a surface (i.e. settlement of organisms on a surface), in particular surfaces exposed to an aqueous environment or to aqueous liquids (e.g. within tanks, pipes, etc.). It is however, believed that the coatings defined herein are particularly relevant for avoiding or reducing marine bio-fouling, i.e. bio-fouling arising in connection with the exposure of a surface to a marine environment, in particular to seawater.

### A Marine Structure

The present invention also provides a marine structure comprising on at least a part of the outer surface thereof an outermost fouling release coat as defined hereinabove. In particular, at least as part of the outer surface carrying the outermost coating is a submerged part of said structure.

The coating composition, the method of establishing the coating on the substrate surface, and the characteristics of the coating follow the directions given hereinabove.

In one embodiment, the fouling release coating system of the marine structure may consist of an anticorrosive layer, a tie-coat and the fouling release coating as described herein.

In an alternative embodiment, the fouling release coating composition is applied on top of a used fouling release coating system, e.g. on top of a used polysiloxane-based fouling release coat.

In one particular embodiment of the above marine structure, the anticorrosive layer has a total dry film thickness of 100-600 µm, such as 150-450 µm, e.g. 200-400 µm; the tie-coat has a total dry film thickness of 50-500 µm, such as 50-400 µm, e.g. 75-350 µm or 75-300 µm or 75-250 µm; and the fouling release coating has a total dry film thickness of 20-500 µm, such as 20-400 µm, e.g. 50-300 µm.

A further embodiment of the marine structure is that where at least a part of the outermost surface of said structure is coated with a paint system comprising
a total dry film thickness of 150-400 µm of an anticorrosive layer of an epoxy-based coating established by application of 1-4, such as 2-4, layers;
a total dry film thickness of 20-400 µm of the tie-coat established by application of 1-2 layers; and
a total dry film thickness of 20-400 µm of the fouling release coating established by application of 1-2 layers.

In another embodiment of the above marine structure, the fouling release coating is applied directly on the anticorrosive layer without the use of tie-coat.

### Use for improving the antifouling properties of a polysiloxane based coating composition

The invention also provides the combination of one or more non-reactive fluorinated oils and one or more biocides, wherein the weight ratio between the one or more non-reactive fluorinated oils and the one or more biocides is, e.g. in the range 1:0.2 to 1:6, for improving the antifouling properties of a polysiloxane based coating composition.

### General Remarks

Although the present description and claims occasionally refer to a polysiloxane, etc., it should be understood that the coating compositions defined herein may comprise one, two or more types of the individual constituents. In such embodiments, the total amount of the respective constituent should correspond to the amount defined above for the individual constituent.

The "(s)" in the expressions: compound(s), polysiloxane(s), agent(s), etc. indicates that one, two or more types of the individual constituents may be present.

On the other hand, when the expression "one" is used, only one (1) of the respective constituent is present.

### EXAMPLES

### Materials

RF-5000, ex. Shin-Etsu - Japan, silanol-terminated polydimethylsiloxane Xylene from local supplier
DC550, ex. Dow Corning - USA, non-reactive methylphenyl polysiloxane oil
Silikat TES 40 WN, ex. Wacker Chemie - Germany, Ethyl silicate
Neostann U-12, ex. Nitto Kasai - Japan, Dibutyltin Dilaurate
Acetylaceton, ex. Wacker Chemie - Germany, 2,4-pentanedione
Xiameter ® PMX-200 Sil Fluid 1000cs, ex. Dow Corning - UK, Linear dimethylpolysiloxane oil
Xiameter ® PMX-200 Sil Fluid 5000cs, ex. Dow Corning - UK, Linear dimethylpolysiloxane oil
BYK331, ex. BYK - Germany, non-reactive polyether modified polydimethylsiloxane oil
Fomblin Y, ex. Solvay Solexis - Italy, perfluorinated polyether
Lumiflon LF-200, ex. Lumiflon - Japan, Fluorinated polymer
Fluorosil 2110, ex. Siltech Corporation - Canada, perfluoro nononyl ethyl PEG-8 dimethicone Siltech C-1910, ex. Siltech Corporation - Canada, Fluorinated silicone polyetherBayferrox 130M, ex. Lanxess - Germany, Iron oxide
Aerosil R8200, ex. Evonik Industries - Germany, Hexamethyldisilazane treated fumed silica Tego glide 435, ex. Evonik Industries - Germany, non-reactive polyether modified polydimethylsiloxane oil
Micronised wax Crayvallac super, ex. Cray Valley
Aerosil R972, ex. Evonik industries.
Demineralized water
Dynasylan VTMO, ex. Evonik Industries - Germany, vinyltrimethoxysilane
Platinum - divinyltetramethyldisiloxane complex in xylene - 2.1-2.4% platinum concentration, CAS No. 68478-92-2
Polydimethylsiloxane, hydride terminated - MWₙ =1100, eq. weight = 550 g/eq Methylhydrosiloxane - dimethylsiloxane copolymer, hydride terminated - MWn = 2300, eq. weight = 200 g/eq
Polyethylene glycol di allyl ether - MWₙ = 300g/mol, Eq. weight =150 g/eq
Polyethylene glycol mono allyl ether (hydroxyl terminated) - MWₙ = 350 g/mol, eq. weight = 350 g/eq

### Viscosity

In the present application with claims, viscosity is measured at 25 °C in accordance with ISO 2555: 1989.

### Pendant hydrophilic modified polysiloxane (HMP1):

A pendant, curable poly(ethylene glycol) modified polysiloxane is prepared by mixing 25.0 g (polydimethylsiloxane-methylhydrosiloxane, hydride terminated) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 80°C. To this solution, 11.0 g of (vinyltrimethoxysilane) is added dropwise and allowed to react for 1 h at 80°C. After the completion of the reaction, 54.5 g polyethylene glycol mono allyl ether is added dropwise, and allowed to react for 4h at 80°C. The solvent was hereafter partially removed under reduced pressure using a rotary evaporator until the solvent content reached 10% to obtain the final product HMP1. The content of PEG-modified PDMS binder in HMP1 is 90 % w/w. The amount of PEG in the HMP1 binder is 60.2% w/w calculated on dry weight.

### Preparation of linear hydrophilic modified polysiloxane (HMP2):

A linear, curable poly(ethylene glycol) modified polysiloxane is prepared by mixing 5.00 g (polyethylene glycol diallyl ether) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 65°C. To this solution, 65.0 g polydimethylsiloxane (hydride terminated) is added dropwise, and allowed to react for 1 h at 80°C. After the completion of the reaction, 35.0 g of vinyltrimethoxysilane is added dropwise at 80°C and allowed to react for 1 h at 80°C. The solvent was hereafter partially removed under reduced pressure using a rotary evaporator until the solvent content reached 10% to obtain the final product HMP2. The content of PEG-modified PDMS binder in HMP2 is 90 % w/w. The amount of PEG in the HMP2 binder is 4.8% w/w calculated on dry weight.

### Preparation method for the model paints

Part (i) (silanol-terminated polydimethylsiloxane), xylene, (polydimethylsiloxane), silica, (polyamide wax), red iron oxide, (polyether modified polysiloxane), were mixed on a Diaf dissolver equipped with an impeller disc (70 mm in diameter) in a 1 L can for 15 minutes at 2000 rpm.

Part (ii) ethyl silicate, (xylene), catalyst, 2,4-pentanedione, (methylphenyl polysiloxane)) were mixed on a Diaf dissolver equipped with an impeller disc (70 mm in diameter) in a 1 L can for 2 minutes at 500 rpm.

Before the application, part (i) and part (ii) are mixed and the mix is then stirred to obtain homogeneity.

### Test Methods

### Blister Box Test

The Blister Box test is used to determine the influence of polysiloxanes modified with hydrophilic oligomer/polymer moieties on the stability of the PDMS coating to which they are added to.

### Preparation of panels

Steel panels (150x75x15 mm) are coated with 100 µm (dry film thickness, DFT) of a commercial epoxy primer (HEMPADUR Quattro 17634) applied by airless spraying. After 12 - 48 hrs of drying at room temperature a silicone tie coat (HEMPASIL Nexus 27302) is applied by doctor blade of 300 µm clearance. After 16-30 hrs of drying the top coat paint compositions are applied by doctor blade of 400 µm clearance. The panels are dried for 24 hrs before testing in the blister box.

### Testing

The panel surface with the coating system is exposed to 40 °C, saturated water vapour, at an angle of 15°/60° to the horizontal. The reverse side of the panel is exposed to room temperature. At the selected inspection intervals during and after completion of exposure, adhesion between tie coat/top coat and general condition of the top coat are evaluated.

Evaluation of adhesion between tie coat and top coat is based on the below ranking:

| | |
|---|---|
| Adhesion | Ranking Value |
| | |
| FAIL/POOR | No adhesion/poor adhesion |
| GOOD | Acceptable adhesion |

Panels are exposed for two months and typically checked every week.

### Raft Test

### Preparation of panels

An acrylic panel (150x200 mm), sandblasted on one side to facilitate adhesion of the coating, is coated with 100 µm (DFT) of a commercial epoxy (HEMPEL Light Primer 45551) applied by air spraying. After 6 - 24 hrs of drying at room temperature a tie coat is applied by doctor blade of 300 µm clearance. After 16-30 hrs of drying the top coat paint compositions are applied by doctor blade of 400 µm clearance. The panels are dried for at least 72 hrs before immersion on the raft.

### Testing

Panels are tested at two different locations; Spain and Singapore.

### Test site in Spain

Located in Vilanova in north-eastern Spain. At this test site the panels are immersed into sea water with salinity in the range of 37-38 parts per thousand at an average temperature of 17-18 °C.

### Test site in Singapore

At this test site the panels are immersed into sea water with salinity in the range of 29-31 parts per thousand at a temperature in the range of 29-31 °C.

Panels are inspected ever 4-12 weeks and evaluated according to the following scale:

| **Level** | **Description** |
|---|---|
| Excellent | Only slime |
| Good | Algae + Animals < 10 % |
| Fair | 10 % < Algae + Animals < 25 % |
| Poor | Algae + Animals > 25 % |

### Examples

The following model paints can be prepared for testing for antifouling performance.

All entries in model paints table are in weight unless otherwise stated. In the calculation of the final polysiloxane matrix, all the hydrolysable groups are presumed completely hydrolysed and reacted into a matrix through a condensation reaction with the polysiloxane binder. Therefore, the ethyl silicate contributes with 41 % of its weight to the calculations of the final polysiloxane matrix and vinyltrimethoxysilane contributes with 54 % of its weight correspondingly. When calculating the polysiloxane content of the binder matrix, the constituents included in the calculations as the starting materials, however with the above-mentioned corrections for ethyl silicate and vinyltrimethoxysilane.

### Example 1 - Polysiloxane-based coatings fluorinated oils

| Model paints | EC52 | EC53 | EC54 | EC55 | EC56 | EC57 |
|---|---|---|---|---|---|---|
| **Part (i)** | | | | | | |
| Silanol-terminated polydimethylsiloxane | 60.1 | 60.1 | 60.1 | 60.1 | 64.1 | 64.1 |
| Xylene | 17.4 | 17.4 | 17.4 | 17.4 | 17.4 | 17.4 |
| Thixotropic agent | 2.2 | 2.2 | 2.2 | 2.2 | 2.2 | 2.2 |
| Pigments | 8.9 | 8.9 | 3.9 | 3.9 | 3.9 | 8.9 |
| *Biocide:* | | | | | | |
| Copper pyrithione | | | 5 | 5 | 5 | |
| **Total part (i)** | 88.6 | 88.6 | 88.6 | 88.6 | 92.6 | 92.6 |

| **Part (ii)** | | | | | | |
|---|---|---|---|---|---|---|
| Ethyl silicate | 2.3 | 2.3 | 2.3 | 2.3 | 2.3 | 2.3 |
| LF-200 | 4 | | 4 | | | |
| FOMBLIN Y-25 | | 4 | | 4 | | |
| Xylene | 3.6 | 3.6 | 3.6 | 3.6 | 3.6 | 3.6 |
| Dibutyltin dilaurate | 0.4 | 0.4 | 0.4 | 0.4 | 0.4 | 0.4 |
| 2,4-pentanedione | 1.1 | 1.1 | 1.1 | 1.1 | 1.1 | 1.1 |
| **Total part (ii)** | 11.4 | 11.4 | 11.4 | 11.4 | 7.4 | 7.4 |
| **Total part (i), (ii), (iii)** | 100 | 100 | 100 | 100 | 100 | 100 |
| Weight % polysiloxane-based binder matrix in the dry cured coat | 79.9 | 79.9 | 79.9 | 79.9 | 85.1 | 85.1 |
| Performance on raft in Singapore (24 weeks) | Poor | Poor | Fair | Fair | Poor | Poor |
| Adhesion | Good | Good | Good | Good | Good | Good |

| Model paints | EC58 | EC59 | EC60 | EC61 | EC62 | EC63 |
|---|---|---|---|---|---|---|
| **Part (i)** | | | | | | |
| Silanol-terminated polydimethylsiloxane | 62.1 | 62.1 | 62.1 | 62.1 | 64.1 | 64.1 |
| Xylene | 17.4 | 17.4 | 17.4 | 17.4 | 17.4 | 17.4 |
| Thixotropic agent | 2.2 | 2.2 | 2.2 | 2.2 | 2.2 | 2.2 |
| Pigments | 8.9 | 8.9 | 3.9 | 3.9 | 3.9 | 8.9 |
| *Biocide:* | | | | | | |
| Copper pyrithione | | | 5 | 5 | 5 | |
| **Total part (i)** | 90.6 | 90.6 | 90.6 | 90.6 | 92.6 | 92.6 |

| **Part (ii)** | | | | | | |
|---|---|---|---|---|---|---|
| Ethyl silicate | 2.3 | 2.3 | 2.3 | 2.3 | 2.3 | 2.3 |
| FLUOROSIL 2110 | 2 | | 2 | | | |
| C1910 | | 2 | | 2 | | |
| Xylene | 3.6 | 3.6 | 3.6 | 3.6 | 3.6 | 3.6 |
| Dibutyltin dilaurate | 0.4 | 0.4 | 0.4 | 0.4 | 0.4 | 0.4 |
| 2,4-pentanedione | 1.1 | 1.1 | 1.1 | 1.1 | 1.1 | 1.1 |
| **Total part (ii)** | 9.4 | 9.4 | 9.4 | 9.4 | 7.4 | 7.4 |
| **Total part (i), (ii), (iii)** | 100 | 100 | 100 | 100 | 100 | 100 |
| Weight % polysiloxane-based binder matrix in the dry cured coat | 82.5 | 82.5 | 82.5 | 82.5 | 85.1 | 85.1 |
| Performance on raft in Singapore (24 weeks) | Fair/Good | Poor | Excellent | Excellent | Poor | Poor |
| Adhesion | Good | Good | Good | Good | Good | Good |

## Claims

1. A fouling release coating composition comprising a polysiloxane-based binder system constituting at least 40 % by dry weight of the coating composition, 0.01-20 % by dry weight of one or more fluorinated oils, and 0.1-10 % by dry weight of one or more biocides.

2. The coating composition according to claim 1, wherein at least one biocide is an organic biocide.

3. The coating composition according to any one of the preceding claims, wherein the one or more biocides are selected from N²-tert-butyl-N⁴-cyclopropyl-6-methylthio-1,3,5-triazine-2,4-diamine, 4,5-dichloro-2-n-octyl-4-isothiazolin-3-one, zinc pyrithione, copper pyrithione, zinc ethylene-1,2-bis-dithiocarbamate, and copper thiocyanate.

4. The coating composition according to claim 3, wherein the one or more biocides are selected from zinc pyrithione and copper pyrithione.

5. The coating composition according to any one of the preceding claims, wherein the weight ratio between the one or more fluorinated oils and the one or more biocides is in the range of 1:0.2 to 1:6.

6. The coating composition according to any one of the preceding claims, wherein more than 60 % by weight of the binder matrix is represented by polysiloxane parts.

7. The coating composition according to any one of the preceding claims, wherein the one or more fluorinated oils are selected from fluoroalkyl modified oils.

8. The coating composition according to any one of the preceding claims, wherein the one or more fluorinated oils are selected from perfluorinated oils, perfluoroalkyl-modified polysiloxane, perfluoro siloxane, perfluoro polyether, perfluorinated alkanes, or perfluoroalkyl modified polyalkylene oxide, perfluoro polyalkylene oxide and fluoroalkyl modified polyoxyalkylene polysiloxane oils.

9. The coating composition according to any one of the claims 1-7, wherein the one or more fluorinated oils are selected from perfluoro polyether, perfluoroalkyl modified polyalkylene oxide, perfluoro polyalkylene oxide, and fluoroalkyl modified polyoxyalkylene polysiloxane oils.

10. The coating composition according to any one of the preceding claims, wherein the one or more fluorinated oils are included in the coating composition in an amount of 0.05-10 % by dry weight of the coating composition.

11. The coating composition according to any one of the preceding claims, wherein the one or more fluorinated oil(s) have a viscosity in the range of 10-20,000 mPa·s.

12. The coating composition according to any one of the preceding claims, wherein the coating composition has a viscosity in the range of 25-25,000 mPa·s.

13. A marine structure comprising on at least a part of the outer surface thereof an outermost coating prepared from the coating composition as defined in any one of the preceding claims.

14. The marine structure according to claim 13, wherein at least as part of the outer surface carrying the outermost coating is a submerged part of said structure.

15. The combination of one or more fluorinated oils and one or more biocides, wherein the weight ratio between the one or more fluorinated oils and the one or more biocides is in the range of 1:0.2 to 1:6 for improving the antifouling properties of a polysiloxane based coating composition.

## Patentansprüche

1. Ablagerungstrennbeschichtungszusammensetzung, umfassend ein auf Polysiloxan basierendes Bindersystem, das zumindest aus 40 Trockengewicht-% der Beschichtungszusammensetzung, 0,01-20 Trockengewicht-% von einem oder mehreren fluorierten Ölen und 0,1-10 Trockengewicht-% von einem oder mehreren Bioziden besteht.

2. Beschichtungszusammensetzung nach Anspruch 1, wobei zumindest ein Biozid ein organisches Biozid ist.

3. Beschichtungszusammensetzung nach einem der vorhergehenden Ansprüche, wobei das eine oder die mehreren Biozide aus N²-tert-Butyl-N⁴-cyclopropyl-6-methylthio-1,3,5-triazin-2,4-diamin, 4,5-Dichlor-2-n-octyl-4-isothiazolin-3-on, Zinkpyrithion, Kupferpyrithion, Zinkethylen-1,2-bis-dithiocarbamat und Kupferthiocyanat ausgewählt sind.

4. Beschichtungszusammensetzung nach Anspruch 3, wobei das eine oder die mehreren Biozide aus Zinkpyrithion und Kupferpyrithion ausgewählt sind.

5. Beschichtungszusammensetzung nach einem der vorhergehenden Ansprüche, wobei das Gewichtsverhältnis zwischen dem einen oder den mehreren fluorierten Ölen und den einem oder den mehreren Bioziden in dem Bereich von 1:0,2 bis 1:6 liegt.

6. Beschichtungszusammensetzung nach einem der vorhergehenden Ansprüche, wobei mehr als 60 Gew.-% der Bindermatrix durch Polysiloxanteile dargestellt sind.

7. Beschichtungszusammensetzung nach einem der vorhergehenden Ansprüche, wobei das eine oder die mehreren fluorierten Öle aus Fluoralkyl-modifizierten Ölen ausgewählt sind.

8. Beschichtungszusammensetzung nach einem der vorhergehenden Ansprüche, wobei das eine oder die mehreren fluorierten Öle aus perfluorierten Ölen, Perfluoralkyl-modifiziertem Polysiloxan, Perfluorsiloxan, Perfluorpolyether, perfluorierten Alkanen oder Perfluoralkyl-modifiziertem Polyalkylenoxid, Perfluorpolyalkylenoxid und Fluoralkyl-modifizierten Polyoxyalkylenpolysiloxanölen ausgewählt sind.

9. Beschichtungszusammensetzung nach einem der Ansprüche 1-7, wobei das eine oder die mehreren fluorierten Öle aus Perfluorpolyether, Perfluoralkyl-modifiziertem Polyalkylenoxid, Perfluorpolyalkylenoxid und Fluoralkyl-modifizierten Polyoxyalkylenpolysiloxanölen ausgewählt sind.

10. Beschichtungszusammensetzung nach einem der vorhergehenden Ansprüche, wobei das eine oder die mehreren fluorierten Öle in der Beschichtungszusammensetzung in einer Menge von 0,05-10 Trockengewicht-% der Beschichtungszusammensetzung enthalten sind.

11. Beschichtungszusammensetzung nach einem der vorhergehenden Ansprüche, wobei das eine oder die mehreren fluorierten Öle eine Viskosität in dem Bereich von 10-20.000 mPa·s aufweisen.

12. Beschichtungszusammensetzung nach einem der vorhergehenden Ansprüche, wobei die Beschichtungszusammensetzung eine Viskosität in dem Bereich von 25-25.000 mPa·s aufweist.

13. Meeresbauwerk, umfassend eine äußerste Beschichtung, die aus der Beschichtungszusammensetzung nach einem der vorhergehenden Ansprüche hergestellt ist, an zumindest einem Teil der äußeren Oberfläche davon.

14. Meeresbauwerk nach Anspruch 13, wobei zumindest ein Teil der äußeren Oberfläche, die die äußerste Beschichtung trägt, ein untergetauchter Teil des Bauwerks ist.

15. Kombination von einem oder mehreren fluorierten Ölen und einem oder mehreren Bioziden, wobei das Gewichtsverhältnis zwischen dem einen oder den mehreren fluorierten Ölen und dem einen oder den mehreren Bioziden in dem Bereich von 1:0,2 bis 1:6 zum Verbessern der Antiablagerungseigenschaften einer auf Polysiloxan basierenden Beschichtungszusammensetzung liegt.

## Revendications

1. Composition de revêtement antisalissure comprenant un système de liant à base de polysiloxane constituant au moins 40 % en poids sec de la composition de revêtement, de 0,01 à 20 % en poids sec d'une ou de plusieurs huiles fluorées, et de 0,1 à 10 % en poids sec d'un ou de plusieurs biocides.

2. Composition de revêtement selon la revendication 1, dans laquelle au moins un biocide est un biocide organique.

3. Composition de revêtement selon l'une quelconque des revendications précédentes, dans laquelle les un ou plusieurs biocides sont choisis parmi de la N²-tert-butyl-N⁴-cyclopropyl-6-methylthio-1,3,5-triazine-2,4-diamine, de la 4,5-dichloro-2-n-octyl-4-isothiazolin-3-one, de la pyrithione de zinc, de la pyrithione de cuivre, de l'éthylène-1,2-bis-dithiocarbamate de zinc, et du thiocyanate de cuivre.

4. Composition de revêtement selon la revendication 3, dans laquelle les un ou plusieurs biocides sont choisis parmi de la pyrithione de zinc et de la pyrithione de cuivre.

5. Composition de revêtement selon l'une quelconque des revendications précédentes, dans laquelle le rapport pondéral entre les une ou plusieurs huiles fluorées et les uns ou plusieurs biocides est dans la plage de 1/0,2 à 1/6.

6. Composition de revêtement selon l'une quelconque des revendications précédentes, dans laquelle plus de 60 % en poids de la matrice de liant sont représentés par des parties de polysiloxane.

7. Composition de revêtement selon l'une quelconque des revendications précédentes, dans laquelle les une ou plusieurs huiles fluorées sont choisies parmi des huiles modifiées avec du fluoroalkyle.

8. Composition de revêtement selon l'une quelconque des revendications précédentes, dans laquelle les une ou plusieurs huiles fluorées sont choisies parmi des huiles perfluorées, du polysiloxane modifié avec du perfluoroalkyle, du perfluorosiloxane, du perfluoropolyéther, des alcanes perfluorés ou un oxyde de polyalkylène modifié avec du perfluoroalkyle, un oxyde de perfluoropolyalkylène et des huiles de polyoxyalkylène polysiloxane modifié avec du fluoroalkyle.

9. Composition de revêtement selon l'une quelconque des revendications 1 à 7, dans laquelle les une ou plusieurs huiles fluorées sont choisies parmi du perfluoropolyéther, un oxyde de polyalkylène modifié avec du perfluoroalkyle, un oxyde de perfluoropolyalkylène, et des huiles de polyoxyalkylène polysiloxane modifié avec du fluoroalkyle.

10. Composition de revêtement selon l'une quelconque des revendications précédentes, dans laquelle les une ou plusieurs huiles fluorées sont incluses dans la composition de revêtement en une quantité de 0,05 à 10 % en poids sec de la composition de revêtement.

11. Composition de revêtement selon l'une quelconque des revendications précédentes, dans laquelle les une ou plusieurs huiles fluorées ont une viscosité dans la plage de 10 à 20 000 mPa·s.

12. Composition de revêtement selon l'une quelconque des revendications précédentes, dans laquelle la composition de revêtement a une viscosité dans la plage de 25 à 25 000 mPa·s.

13. Structure marine comprenant sur au moins une partie de la surface externe de celle-ci un revêtement le plus externe préparé à partir de la composition de revêtement telle que définie dans l'une quelconque des revendications précédentes.

14. Structure marine selon la revendication 13, dans laquelle au moins une partie de la surface externe portant le revêtement le plus externe est une partie submergée de ladite structure.

15. Combinaison d'une ou de plusieurs huiles fluorées et d'un ou de plusieurs biocides, dans laquelle le rapport pondéral entre les une ou plusieurs huiles fluorées et les un ou plusieurs biocides sont dans la plage de 1/0,2 à 1/6 pour améliorer les propriétés antisalissures d'une composition de revêtement à base de polysiloxane.
